(19) Europäisches Patentamt
European Patent Office
Office européen des brevets

(11) EP 0 559 609 B1

(12) EUROPÄISCHE PATENTSCHRIFT

(45) Veröffentlichungstag und Bekanntmachung des Hinweises auf die Patenterteilung:
**29.01.1997 Patentblatt 1997/05**

(51) Int Cl.[6]: **D06P 5/20**

(21) Anmeldenummer: **93810112.8**

(22) Anmeldetag: **22.02.1993**

# (54) Verfahren zur Herstellung von Mehrfarben- oder Hell-Dunkel-Effekten

Process for the production of multicolor or light-dark effect

Procédé d'élaboration d'effet multicolore ou clair/sombre

(84) Benannte Vertragsstaaten:
**BE CH DE ES FR GB IT LI**

(30) Priorität: **03.03.1992 CH 650/92**

(43) Veröffentlichungstag der Anmeldung:
**08.09.1993 Patentblatt 1993/36**

(73) Patentinhaber: **Ciba SC Holding AG**
**4057 Basel (CH)**

(72) Erfinder:
- **Hannemann, Klaus, Dr.**
  **W-7850 Lörrach (DE)**
- **Höhener, Alfred, Dr.**
  **CH-4312 Magden (CH)**
- **Wang, Huanzhong, Dr.**
  **CH-4056 Basel (CH)**
- **Rembold, Manfred, Dr.**
  **CH-4147 Aesch (CH)**

(56) Entgegenhaltungen:
**DE-A- 2 237 485**

- **DATABASE WPIL Week 9109, Derwent Publications Ltd., London, GB; AN 91-060998**
- **DATABASE WPIL Week 8715, Derwent Publications Ltd., London, GB; AN 87-105595**
- **CHEMICAL ABSTRACTS, vol. 107 Columbus, Ohio, US; abstract no. 60549, RYU, JAM MI ET AL. 'Dyeing properties of wool treated with low temperature plasma'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 559 609 B1

**Beschreibung**

Die vorliegende Erfindung betrifft ein Verfahren zur Herstellung von Mehrfarben- oder Hell-Dunkel-Effekten auf natürlichem und synthetischem Polyamid-Fasermaterial durch eine Vorbehandlung des Fasermaterials mittels einer Plasma- oder Corona-Entladung.

Das Erzielen von Mehrfarben- oder Hell-Dunkel-Effekten, in einbadiger Arbeitsweise durchgeführt, ist durch die Entwicklung von sogenannten differential-dyeing Fasern, d.h. Fasern gleichen chemischen Ursprungs, die aber auf Grund ihrer chemischen Modifizierung unterschiedliche Farbstoffaffinitäten aufweisen, entscheidend beeinflußt worden. Die unterschiedliche Affinität lässt sich durch modifizierte Polyamidfasertypen erzielen, die sich durch die Endaminogruppenzahl unterscheiden und somit unterschiedlich tief anfärbbar sind.

Eine andere Möglichkeit zur Erzielung eines Mehrfarbeneffektes besteht darin, dass man zunächst ausgewählte Stellen einer Polyamid-Stückware mit einem Reservierungsmittel vorbehandelt, das Reservierungsmittel fixiert und daraufhin das Substrat mit einem oder mehreren anionischen Farbstoffen färbt, die dann zu einem höheren Grad mit jenen Stellen des Substrates reagieren, die nicht mit dem Reservierungsmittel behandelt wurden. Auf diese Weise lässt sich ein Muster von gefärbten, weniger angefärbten und ungefärbten Flächen erzielen.

Es wurde nun gefunden, dass man auf den Einsatz von differential dyeing Fasern oder auf eine nasschemiche Vorbehandlung mit einem Reservierungsmittel verzichten kann, wenn man ausgewählte Stellen einer Stückware vor dem Färben einer Plasma- oder Corona-Entladung unterwirft.

Gegenstand der vorliegenden Erfindung ist demnach ein Verfahren zur Herstellung von Mehrfarben- oder Hell-Dunkel-Effekten auf synthetischem oder natürlichem Polyamid-Fasermaterial, das dadurch gekennzeichnet ist, dass man ausgewählte Stellen einer Stückware vor dem Färbeprozess einer Plasma-Entladung oder einer Corona-Entladung unterwirft und anschliessend die Färbung mit einem anionischen Farbstoff fertigstellt.

Zur Erzielung des Mehrfarbeneffektes werden bestimmte Stellen des trockenen, unbehandelten Textilgutes mit einem Klebeband oder einer das gewünschte Muster aufweisenden Schablone abgedeckt. Das Substrat ist somit für die Vorbehandlung durch eine Niedertemperaturplasma- oder Corona-Entladung vorbereitet

Definierte Bilder auf dem Substrat lassen sich auch durch gezielte elektromagnetische Steuerung des Plasmastrahls herstellen.

Die Prinzipien der Gasentladung und insbesondere der Plasma-Chemie sind bekannt und beispielsweise beschrieben von A.T. Bell, "Fundamentels of Plasma Chemistry" in "Technology and Application of Plasma Chemistry", ed. J. R. Hollahan und A.T. Bell, Wiley, New York (1974) oder H. Suhr, Plasma Chem. Plasma Process. 3(1), 1, (1983).

Grundlegendes über die Coronabehandlung in Veredelungsprozessen ist z.B. in COATING 7/90 oder Textilbetrieb 5/82 zu finden.

Für die Niedertemperaturplasma-Vorbehandlung kommen einerseits nichtpolymerisierende Gase in Betracht, d. h. Gase, welche unter Plasmabedingungen per se nicht polymerisieren und auf dem Fasermaterial keinen störenden Polymerfilm erzeugen oder hydrophobierende Gase, d.h. Gase, die dem zu behandelnden Fasermaterial hydrophobe Eigenschaften verleihen, in Betracht. Nichtpolymerisierende Gase sind z.B. Sauerstoff, Stickstoff, Argon, Helium, Wasserstoff, Ammoniak, Kohlendioxid oder Mischungen dieser Gase. Ganz besonders geeignet sind Sauerstoff, Stickstoff oder Argon, bzw. Luft als Gasgemisch. Hydrophobierende Gase sind z.B. fluorierte Kohlenwasserstoffe oder Gasgemische aus Kohlenwasserstoffen und fluorierten Kohlenwasserstoffen, wie z.B. Gemische aus Methan oder Ethan mit $CF_4$ oder $C_2F_6$, die unter den Druckverhältnissen einer Plasma-Entladung verdampfbar sind. Als Beispiele für fluorierte Kohlenwasserstoffverbindungen seien $CF_4$, $C_2F_6$, $C_3F_8$ oder $C_4F_8$ genannt Vorzugsweise wird $CF_4$ oder $C_2F_6$ verwendet.

Die Plasma-Vorbehandlung wird in einem Plasma-Reaktor durchgeführt. Die Konstruktion und die apparative Anordnung eines solchen Reaktors ist an und für sich bekannt. Vorzugsweise verwendet man für das vorliegende Verfahren einen Reaktor, der mit 2 parallel angeordneten Elektroden ausgerüstet ist (Parallelplattenreaktor). Es kommen aber auch grösser dimensionierte Anordnungen mit kleineren Entladungselektroden in Betracht, wie man sie auch bei der Coronabehandlung vorfindet

Für die Plasmavorbehandlung bringt man das präparierte Substrat in einen Plasma-Reaktor. Das zu behandelnde Fasermaterial wird zwischen beiden Elektroden plaziert. Der Elektrodenabstand beträgt 1 bis 30, vorzugsweise 2 bis 10 cm. Nachdem man das Textilgut in den Reaktor eingebracht hat, wird dieser mit einer mechanischen Vakuumpumpe evakuiert. Beim kontinuierlichen Durchlaufbetrieb (beispielsweise von aufgerollten Stoffbahnen) werden spezielle Vakuumschleusen angelegt, damit das Behandlungsgut störungsfrei ein-, und nach abgeschlossener Vorbehandlung wieder ausgeführt werden kann. Anschliessend wird das gewünschte Gas oder Gasgemisch unter Einstellung einer vordefinierten Durchflussrate, die zwischen 0,1 und 500, vorzugsweise 1 bis 200 sccm/min liegt, zudosierL Unter dem Einfluss des kontinuierlichen Vakuums strömt das Gas durch den Reaktor. Der Druck im Reaktor liegt zwischen $10^{-4}$ und 10 mbar, vorzugsweise $10^{-2}$ und 1 mbar. Das eigentliche Plasma wird durch Anlegen einer variablen Spannung an die Elektroden erzeugt. An den Elektroden kann eine Gleich- (DC) oder Wechselspannung (AC) angelegt werden, wobei mit einem Sender Frequenzen von 1 kHz bis 3 GHz erzeugt werden können. Vorzugsweise werden Frequenzen

von 1 kHz bis 120 kHz, 13,56 MHz, 27,12 MHz oder 2,45 GHz verwendet. Zusammen mit dem Gas entsteht im Reaktor eine Glimmentladung. Es kommt zur Ausbildung von energiereichen Ionen, Elektronen, sowie hochreaktiven neutralen Molekülen bzw. Radikalen, die mit der Oberfläche des Textilgutes in Wechselwirkung treten. Die elektrische Leistung kann ebenfalls variiert werden und liegt zwischen 1 und 100 Kilowatt, vorzugsweise 1 bis 300 Watt. Die Behandlungsdauer, d.h. die effektive Zeit, in der das Fasermaterial dem Plasma ausgesetzt ist, liegt zwischen 0,1 Sekunden und 10 Minuten, vorzugsweise 1 bis 120 Sekunden.

Die Niedertemperaturplasmavorbehandlung wird vorzugsweise unter folgenden Bedingungen durchgeführt:

- (a) eingesetztes Gas:

  ($a_1$) nicht polymerisierendes Gas: Sauerstoff, Stickstoff oder Argon,
  ($a_2$) hydrophobierendes Gas: $CH_4$, $CF_4$, $C_2F_6$ oder Gemische dieser Gase

- (b) Elektrodenabstand: 2 bis 10 cm,
- (c) Durchflussrate: 1 bis 200 sccm/min
- (d) Druck: $10^{-2}$ mbar bis 1 mbar,
- (e) Senderfrequenz: 1 kHz bis 3 GHz insbesondere 1 kHz bis 30 MHz
- (f) Leistung: 50 W bis 2 kW und
- (g) Behandlungsdauer: 1 bis 120 Sekunden.

Für die Coronabehandlung verwendet man eine Apparatur, die aus einem Hochleistungsgenerator und einem Elektrodensystem besteht. Es kommen dabei Generatoren in Betracht, die eine sinusförmige Wechselspannung von 1 bis 20 kV produzieren mit einer Frequenz von 10 bis 40 kHz. Das Elektrodensystem besteht aus einer Entladungselektrode, an die die Hochspannung angelegt wird und einer Trägerwalze, die als elektrisch geerdete Gegenelektrode geschaltet ist. Die beiden Elektroden haben einen Abstand von nur einigen Millimetern. Durch diesen Spalt wird nach Anlegen der Spannung das zu behandelnde Fasermaterial hindurchgeführt. Die Corona-Entladung wird gewöhnlich an der Umgebungsluft bei Atmosphärendruck durchgeführt. Um auf dem Fasermaterial eine bestimmte Oberflächenenergie einzustellen, muß auf ein Flächenelement des zu behandelnden Fasermaterials ein bestimmter Energiebetrag aufgebracht werden. Diese sogenannte "Corona-Dosis" [$W \cdot min/cm^2$] ist folgendermaßen definiert:

$$\text{Dosis (D)} = \frac{\text{Generator-Leistung (P)}}{\text{Corona-Breite (CB) x Bahngeschwindigkeit (V)}}$$

Die Corona-Dosis liegt zwischen 100 und 3000, vorzugswiese 400 und 1000 $W \cdot min/cm^2$.

An die Plasma- bzw. Corona-Vorbehandlung wird der eigentliche Färbeprozess angeschlossen.

Als Farbstoffe kommen Säure- oder Metallkomplexfarbstoffe, z.B. 1:2-Chrom-, 1:2-Kobalt- oder Kupfer-Komplexfarbstoffe, aber auch Dispersionsfarbstoffe oder Reaktivfarbstoffe in Betracht. Als Farbstoffe können auch Mischungen eingesetzt werden, wobei Bichromie- oder Trichromiefärbungen erzeugt werden können.

Beispiele für solche Farbstoffe sind in Colour Index, 3. Auflage, 1971, Band 4, beschrieben.

Unter Reaktivfarbstoffen ist die im Colour Index, 3. Auflage 1971 als "Reactive Dyes" bezeichnete Farbstoffklasse zu verstehen. Es handelt sich dabei um Farbstoffe, die mindestens tens eine mit Polyhydroxylfasern (Cellulosefasern) oder Polyamidfasern, besonders Wolle, reaktionsfähige Gruppe, eine Vorstufe hierfür oder einen mit Polyhydroxylfasern oder Polyamidfasern reaktionsfähigen Substituenten enthalten.

Die Färbung erfolgt nach dem Ausziehverfahren. Die Menge der Farbstoffe, die der Färbeflotte zugesetzt werden, richtet sich nach der gewünschten Farbstärke. Im allgemeinen haben sich Mengen von 0,01 bis 10 Gewichtsprozent, vorzugsweise 0,01 bis 2 Gewichtsprozent, bezogen auf das eingesetzte Fasermaterial, bewährt.

Das Flottenverhälmis kann innerhalb eines weiten Bereiches gewählt werden, z.B. 1:3 bis 1:100, vorzugsweise 1:8 bis 1:30.

Die Färbebäder können neben den Farbstoffen Mineralsäuren, wie z.B. Schwefelsäure oder Phosphorsäure, organische Säuren, zweckmäßig aliphatische Carbonsäuren wie Ameisensäure, Essigsäure, Oxalsäure oder Zitronensäure und/oder Salze wie Ammoniumacetat, Ammoniumsulfat oder Natriumacetat enthalten. Die Säuren dienen der Einstellung des pH-Wertes der erfindungsgemäss verwendeten Flotten, der zwischen 2 und 7 liegt.

Weitere Zusätze, wie z.B. Reservierungs- und/oder Egalisiermittel sind für das Färbebad nicht erforderlich.

Ebenso bedarf es auch für den Färbeprozess keiner besonderen Vorrichtungen. Es können die üblichen Färbeapparaturen, wie beispielsweise offene Bäder, Packapparate, Jigger-, Paddelapparate, Baumfärbeapparate, Zirkulations- oder Düsenfärbeapparate oder Haspelkufen verwendet werden.

Das Färben erfolgt mit Vorteil bei einer Temperatur im Bereich von 60 bis 120°C, vorzugsweise 70 bis 105°C. Die Färbedauer hält sich im üblichen Rahmen und beträgt in der Regel 10 bis 120 Minuten.

Nach Beendigung der Färbung kann dem Färbeprozess eine alkalische Nachbehandlung, wie z.B. mit wässrigem Ammoniak, Alkalimetallhydroxiden, Alkalimetallcarbonaten, -hydrogencarbonaten oder Hexamethylentetraamin angeschlossen werden. Der pH-Wert der Alkali enthaltenden Färbebäder beträgt zweckmässigerweise 7,5 bis 9, vorzugsweise 8 bis 8,5.

Das Färben des mittels einer Plasma- bzw. Corona-Entladung vorbehandelten Fasermaterials wird zweckmäßig so durchgeführt, dass man das Färbegut mit einer wässrigen Flotte, die den Farbstoff und die Säure enthält, kurz behandelt Hierauf steigert man die Temperatur langsam, um in einem Bereich von 70 bis 105°C und während 10 bis 90 Minuten, vorzugsweise 30 bis 60 Minuten zu färben. Anschliessend wird das Färbegut bei Bedarf nach Zusatz von Alkalien, vorzugsweise Natriumhydrogencarbonat oder Natriumcarbonat noch 10 bis 20 Minuten bei 70 bis 90°C behandelt Am Schluß wird das gefärbte Material herausgezogen und wie üblich gespült, abgesäuert und getrocknet.

Als Fasermaterial, das erfindungsgemäss vorbehandelt und anschliessend gefärbt werden kann, kommt natürliches oder synthetisches Polyamid in Betracht. Als synthetisches Polyamid-Fasermaterial wird z.B. Polyamid 6, Polyamid 66 oder auch Polyamid 12 verwendet Neben den reinen Polyamidfasern kommen vor allem auch Fasermischungen aus Polyamid und Polyurethan in Betracht, so z.B. aus Polyamid/Polyurethan-Material im Mischungsverhältnis 70:30, insbesondere als Mikrofaser. Als natürliches Polyamid kommt Wolle oder Mischungen aus Wolle/Polyacrylnitril, Wolle/Polyester oder Wolle/Baumwolle in Betracht.

Man erhält nach dem erfindungsgemässen Verfahren Färbungen mit sehr guter Differenzierung der Farbtiefe auf einheitlichem Polyamid-Fasermaterial ohne die Verwendung von Reservierungs- oder Egalisiermitteln. Der Vielfarbeneffekt lässt sich auf einfache Weise durch Variation der Plasma- bzw. Corona-Parameter steuern. Durch den Verzicht auf nasschemische Färbereihilfsmittel, wie z.B. Egalisier- oder Reservierungsmittel, entstehen auch keine Abwasserprobleme. Die Plasmavorbehandlung stellt ein "trockenes" Verfahren dar, bei dem nahezu keine Abfallprodukte erzeugt werden. Die vorliegende Erfindung bietet also auch ökologische Vorteile. Ebenfalls kann auf eine Chlorierung der Wolle verzichtet werden, da die mit dem erfindungsgemässen Verfahren behandelte Wolle gleichzeitig schrumpffest ausgerüstet wird.

Die nachfolgenden Beispiele veranschaulichen die Erfindung. Darin sind die Teile Gewichtsteile und Prozente Gewichtsprozente.

Beispiel 1: Auf einem Wollgewebe werden ausgewählte Stellen mit einem Klebeband abgedeckt. Das Gewebe wird so einer Plasmavorbehandlung unter folgenden Bedingungen unterzogen:

| | |
|---|---|
| Frequenz: | 13.56 MHz |
| Leistung: | 250 Watt |
| Druck: | 0.1 mbar |
| Gas: | Sauerstoff |
| Durchflussrate: | 10 sccm/min |
| Elektrodenabstand: | 3 cm |
| Behandlungsdauer: | 90 Sekunden |

Nach der Behandlung wird das Klebeband entfernt und das Gewebe nach einem üblichen Färbeverfahren ohne die Verwendung eines Egalisiermittels gefärbt. Das Färbebad enthält:
1,5% des Farbstoffes der Formel

(I)

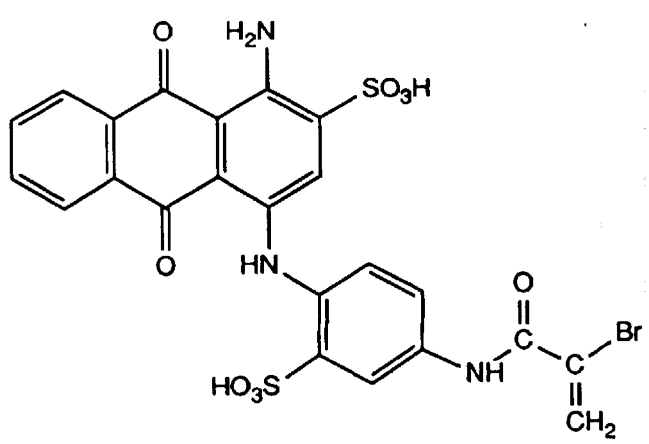

sowie

1 g/l Natriumacetat

Der pH-Wert wird mit Essigsäure (80%ig) auf 4,6 eingestellt Es wird mit 1°C/min auf Kochtemperatur aufgeheizt, 60 Minuten bei dieser Temperatur gefärbt und die Färbung wie üblich fertiggestellt. Die plasmavorbehandelten Stellen sind stark angefärbt, während die mit dem Klebeband abgedeckten Stellen fast farblos sind.

## Patentansprüche

1. Verfahren zur Herstellung von Mehrfarben- oder Hell-Dunkel- Effekten auf synthetischem oder natürlichem Polyamid-Fasermaterial, dadurch gekennzeichnet, dass man ausgewählte Stellen einer Stückware vor dem Färbeprozess einer Plasma-Entladung oder einer Corona-Entladung unterwirft und anschliessend die Färbung mit einem anionischen Farbstoff fertigstellt.

2. Verfahren gemäss Anspruch 1, dadurch gekennzeichnet, dass bei einer Vorbehandlung, die durch eine Plasma-Entladung erfolgt, ein nichtpolymerisierendes oder hydrophobierendes Gas eingesetzt wird.

3. Verfahren gemäss Anspruch 2, dadurch gekennzeichnet, dass bei einer Plasma-Vorbehandlung als nichtpolymerisierendes Gas Sauerstoff, Stickstoff, Argon, Helium, Wasserstoff, Ammoniak oder Kohlendioxid oder Gemische dieser Gase verwendet werden.

4. Verfahren gemäss Anspruch 3, dadurch gekennzeichnet, dass Sauerstoff, Stickstoff, Argon oder Luft als Gasgemisch eingesetzt werden.

5. Verfahren gemäss Anspruch 2, dadurch gekennzeichnet, dass als hydrophobierende Gase fluorierte Kohlenwasserstoffe eingesetzt werden.

6. Verfahren gemäss Anspruch 2 oder 5, dadurch gekennzeichnet, dass als fluorierte Kohlenwasserstoffe $CF_4$ oder $C_2F_6$ eingesetzt werden.

7. Verfahren gemäss einem der Ansprüche 2, 5 oder 6, dadurch gekennzeichnet, dass als hydrophobierende Gase Gemische aus fluorierten Kohlenwasserstoffen und Kohlenwasserstoffen in Betracht kommen.

8. Verfahren gemäss Anspruch 7, dadurch gekennzeichnet, dass als hydrophobierende Gase Gemische aus Methan oder Ethan mit $CF_4$ oder $C_2F_6$ verwendet werden.

9. Verfahren gemäss einem der Ansprüche 2 bis 8, dadurch gekennzeichnet, dass die Durchflussrate der Gase oder der Gasgemische zwischen 0,1 sccm/min und 500 sccm/min liegt.

10. Verfahren gemäss einem der Ansprüche 2 bis 9, dadurch gekennzeichnet, dass der Elektrodenabstand 1 bis 30 cm beträgt.

11. Verfahren gemäss einem der Ansprüche 2 bis 10, dadurch gekennzeichnet, dass die Plasmavorbehandlung bei einem Druck von $10^{-4}$ mbar bis 10 mbar durchgeführt wird.

12. Verfahren gemäss einem der Ansprüche 2 bis Anspruch 11, dadurch gekennzeichnet, dass die Plasmafrequenz zwischen 1 kHz und 3 GHz liegt.

13. Verfahren gemäss einem der Ansprüche 2 bis 12, dadurch gekennzeichnet, dass die Leistung zwischen 1 Watt und 100 Kilowatt liegt

14. Verfahren gemäss einem der Ansprüche 2 bis 13, dadurch gekennzeichnet, dass die Plasmabehandlungsdauer zwischen 0,1 Sekunden und 10 Minuten liegt.

15. Verfahren gemäss einem der Ansprüche 2 bis 14, dadurch gekennzeichnet, dass die Plasmavorbehandlung unter folgenden Bedingungen durchgeführt wird:

   - (a) eingesetztes Gas:

($a_1$) nicht polymerisierendes Gas: Sauerstoff, Stickstoff oder Argon,
($a_2$) hydrophobierendes Gas $CH_4$, $CF_4$, $C_2F_6$ oder Gemische dieser Gase

- (b) Elektrodenabstand: 2 bis 10 cm,
- (c) Durchflussrate: 1 bis 200 sccm/min
- (d) Druck: $10^{-2}$ mbar bis 1 mbar,
- (e) Senderfrequenz: 1 kHz bis 3 GHz
- (f) Leistung: 50 W bis 2 kW und
- (g) Behandlungsdauer: 1 1 bis 120 Sekunden.

**16.** Verfahren gemäss Anspruch 1, dadurch gekennzeichnet, dass die Corona-Entladung mit der Umgebungsluft bei Atmosphärendruck durchgeführt wird

**17.** Verfahren gemäss Anspruch 16, dadurch gekennzeichnet, dass eine Wechselspannung von 1 bis 40 kV benötigt wird.

**18.** Verfahren gemäss Anspruch 16 oder 17, dadurch gekennzeichnet, dass die Frequenz 10 bis 40 kHz beträgt.

**19.** Verfahren gemäss einem der Ansprüche 16 bis 18, dadurch gekennzeichnet, dass die Corona-Dosis zwischen 100 und 3000 $W\cdot min/cm^2$ liegt.

**20.** Verfahren gemäss einem der Ansprüche 1 bis 19, dadurch gekennzeichnet, dass die wässrige Flotte kein Reservierungs- oder Egalisiermittel enthält.

**21.** Das gemäss einem der Ansprüche 1 bis 20 behandelte Fasermaterial.

**22.** Verfahren gemäss einem der Ansprüche 1 bis 20, dadurch gekennzeichnet, dass man als anionischen Farbstoff einen anionischen Reaktivfarbstoff verwendet.

**Claims**

**1.** A process for producing multicolour or light/dark effects on natural or synthetic polyamide fibre material by subjecting selected areas of piece goods to a plasma or corona discharge treatment before the dyeing process and subsequently completing dyeing with an anionic dye.

**2.** A process according to claim 1, wherein a non-polymerizing gas or a gas which imparts hydrophobic properties is used in a plasma discharge pretreatment.

**3.** A process according to claim 2, wherein the non-polymerizing gas used in a plasma pretreatment is oxygen, nitrogen, argon, helium, hydrogen, ammonia or carbon dioxide or mixtures of these gases.

**4.** A process according to claim 3, wherein oxygen, nitrogen, argon or air are employed as gas mixture.

**5.** A process according to claim 2, wherein as gases which impart hydrophobic properties fluorinated hydrocarbons are employed.

**6.** A process according to claim 2 or 5, wherein the fluorinated hydrocarbons employed are $CF_4$ or $C_2F_6$.

**7.** A process according to any one of claims 2, 5 or 6, wherein as gase. which impart hydrophobic properties mixtures of fluorinated hydrocarbons and hydrocarbons are considered.

**8.** A process according to claim 7, wherein as gases which impart hydrophobic properties mixtures of methane or ethane with $CF_4$ or $C_2F_6$ are used.

**9.** A process according to any one of claims 2 to 8, wherein the flow rate of the gases or the gas mixtures is between 0.1 sccm/min and 500 sccm/min.

**10.** A process according to any one of claims 2 to 9, wherein the electrode spacing is from 1 to 30 cm.

**11.** A process according to any one of claims 2 to 10, wherein the plasma pretreatment is carried out under a pressure of $10^{-4}$ mbar to 10 mbar.

**12.** A process according to any one of claims 2 to claim 11, wherein the plasma frequency is between 1 kHz and 3 GHz.

**13.** A process according to any one of claims 2 to 12, wherein the power is between 1 watt and 100 kilowatts.

**14.** A process according to any one of claims 2 to 13, wherein the duration of the plasma treatment is between 0.1 second and 10 minutes.

**15.** A process according to any one of claims 2 to 14, wherein the plasma treatment is carried out under the following conditions:

- (a) gas employed:

  ($a_1$) non-polymerizing gas: oxygen, nitrogen or argon,
  ($a_2$) gas which imparts hydrophobic properties: $CH_4$, $CF_4$, $C_2F_6$ or mixtures of these gases

- (b) electrode spacing: 2 to 10 cm,
- (c) flow rate: 1 to 200 sccm/min
- (d) pressure: $10^{-2}$ mbar to 1 mbar,
- (e) transmitter frequency: 1 kHz to 3 GHz,
- (f) power: 50 W to 2 kW and
- (g) treatment time: 1 to 120 seconds.

**16.** A process according to claim 1, wherein the corona discharge is carried out with the ambient air and under atmospheric pressure.

**17.** A process according to claim 16, wherein an alternating current of 1 to 40 kV is required.

**18.** A process according to claim 16 or 17, wherein the frequency is from 10 to 40 kHz.

**19.** A process according to any one of claims 16 to 18, wherein the corona dose is between 100 and 3000 W·min/$cm^2$.

**20.** A process according to any one of claims 1 to 19, wherein the aqueous liquor contains no resist or levelling agent.

**21.** The fibre material treated according to any one of claims 1 to 20.

**22.** A process according to any one of claims 1 to 20, wherein the anionic dye used is an anionic reactive dye.

**Revendications**

**1.** Procédé d'élaboration d'effets multicolore ou clair-sombre sur des matériaux fibreux en polyamide synthétique ou naturel, caractérisé en ce que l'on soumet certaines zones d'une pièce de tissu, avant la teinture, à une décharge à plasma ou une décharge couronne et en ce que l'on effectue ensuite la teinture avec un colorant anionique.

**2.** Procédé conforme à la revendication 1, caractérisé en ce que l'on utilise, lors d'un prétraitement par décharge à plasma, un gaz qui ne polymérise pas ou un gaz hydrophobisant.

**3.** Procédé conforme à la revendication 2, caractérisé en ce que l'on utilise, comme gaz qui ne polymérise pas, lors d'un prétraitement par plasma de l'oxygène, de l'azote, de l'argon, de l'hélium, de l'hydrogène, de l'ammoniaque ou du dioxyde de carbone ou des mélanges de ces gaz entre eux.

**4.** Procédé conforme à la revendication 3, caractérisé en ce que l'on utilise de l'oxygène, de l'azote, de l'argon ou

de l'air en tant que mélange de gaz.

**5.** Procédé conforme à la revendication 2, caractérisé en ce que l'on utilise, comme gaz hydrophobisants, des hydrocarbures fluorés.

**6.** Procédé conforme à la revendication 2 ou 5, caractérisé en ce que l'on utilise, en tant qu'hydrocarbure fluoré, du $CF_4$ ou du $C_2F_6$.

**7.** Procédé conforme à une des revendications 2, 5 ou 6, caractérisé en ce que l'on utilise, en tant que gaz hydrophobisant, des mélanges d'hydrocarbures fluorés et d'hydrocarbures.

**8.** Procédé conforme à la revendication 7, caractérisé en ce que l'on utilise, en tant que gaz hydrophobisant, des mélanges contenant du méthane ou de l'éthane et du $CF_4$ ou $C_2F_6$.

**9.** Procédé conforme à une des revendications 2 à 8, caractérisé en ce que le débit des gaz ou des mélanges de gaz est compris entre 0,1 et 500 ccm/min (conditions normales de température et de pression).

**10.** Procédé conforme à une des revendications 2 à 9, caractérisé en ce que l'intervalle entre les électrodes est de 1 à 30 cm.

**11.** Procédé conforme à une des revendications 2 à 10, caractérisé en ce que le prétraitement par plasma est effectué à une pression comprise entre $10^{-4}$ et 10 mbar.

**12.** Procédé conforme à une des revendications 2 à 11, caractérisé en ce que la fréquence du plasma est comprise entre 1 kHz et 3 GHz.

**13.** Procédé conforme à une des revendications 2 à 12, caractérisé en ce que la puissance est comprise entre 1 Watt et 100 kW.

**14.** Procédé conforme à une des revendications 2 à 13, caractérisé en ce que la durée de traitement par plasma est comprise entre 0,1 seconde et 10 minutes.

**15.** Procédé conforme à une des revendications 2 à 14, caractérisé en ce que le prétraitement par plasma se fait dans les conditions suivantes :

(a) gaz utilisé :

($a_1$) gaz qui ne polymérise pas : oxygène, azote ou argon
($a_2$) gaz hydrophobisant : $CH_4$, $CF_4$, $C_2F_6$ ou des mélanges de ces gaz

(b) intervalle entre électrodes : 2 à 10 cm
(c) débit : 1 à 200 ccm/min (cntp)
(d) pression : $10^{-2}$ mbar à 1 mbar
(e) fréquence d'émetteur : 1kHz à 3 GHz
(f) puissance : 50 W à 2 kW et
(g) durée de traitement : 1 à 120 sec

**16.** Procédé conforme à la revendication 1, caractérisé en ce que la décharge couronne est effectuée dans l'air ambiant et à pression atmosphérique.

**17.** Procédé conforme à la revendication 16, caractérisé en ce qu'une tension alternative de 1 à 40 kV est nécessaire.

**18.** Procédé conforme à la revendication 16 ou 17, caractérisé en ce que la fréquence est comprise entre 10 et 40 kHz.

**19.** Procédé conforme à une des revendications 16 à 18, caractérisé en ce que la dose corona est comprise entre 100 et 3000 $W.min/cm^2$.

**20.** Procédé conforme à une des revendications 1 à 19, caractérisé en ce que le bain aqueux ne contient pas d'agent

de réserve ou d'agent d'unisson.

**21.** Matériau fibreux traité conformément à une des revendications 1 à 20.

**22.** Procédé conforme à une des revendications 1 à 20, caractérisé en ce que l'on utilise, comme colorant anionique, un colorant réactif anionique.